**Europäisches Patentamt**

**European Patent Office**

**Office européen des brevets**

(19)

(11) Veröffentlichungsnummer: **0 038 491**
**A2**

(12) # EUROPÄISCHE PATENTANMELDUNG

(21) Anmeldenummer: **81102742.4**

(22) Anmeldetag: **10.04.81**

(51) Int. Cl.³: **B 65 G 67/02**
**B 65 G 41/00, B 65 G 47/80**

(30) Priorität: **17.04.80 DE 3014782**

(43) Veröffentlichungstag der Anmeldung:
**28.10.81 Patentblatt 81/43**

(84) Benannte Vertragsstaaten:
**AT BE CH GB IT LI NL SE**

(71) Anmelder: **Ingenieurgesellschaft Hölter + Damann mbH**
**Beisenstrasse 39-41**
**D-4390 Gladbeck(DE)**

(72) Erfinder: **Obering, Franz-Josef Damann**
**Dammstrasse 110**
**D-4791 Henglarn(DE)**

(72) Erfinder: **Arciszewski, Bernhard**
**Bottroper Strasse 31**
**D-4250 Bottrop(DE)**

(74) Vertreter: **Spalthoff, Adolf, Dipl.-Ing.**
**Pelmanstrasse 31 P.O. Box 34 02 20**
**D-4300 Essen 1(DE)**

(54) **Mobilgurtförderer für Stückgüter.**

(57) Die Erfindung betrifft ein Mobilfördergerät zum Be- und Entladen von Stückgütern. Die Aufgabe besteht darin, einem Mobilförderer in Kompaktbauweise zu schaffen und mit diesem einen gezielten und kurzen Belade- und Entladevorgang zu erreichen. Erfindungsgemäß wird dies dadurch erreicht, daß das Mobilfördergerät mit einem Standrohr (20) auf einem Radsatz (8) verlagert mit einem Stau- Drehteller (4) armiert ist, um welchen heb- und senkbare Gurtförderer (2,5) angeordnet sind, die das Material auf den Stau-Drehteller (4) transportieren und dieses Material über Führungsverteiler (3) so weiterleiten, daß es auf ein anderes Transportsystem, vorzugsweise Förderband oder Rollenband im gesamten Bereich des Stau-Drehtellers (4) übergeben werden kann. Der Stau- Drehteller (4) ist vorzugsweise über einen Drehkranz (10) mit einer Innenverzahnung ausgerüstet. Das Aufgabeband (2) mit integrierter Rollenbahn (1) ist höhenverstellbar und in Horizontalachse über einen Drehkranz (12) um das Standrohr (20) schwenkbar angeordnet. Am Abgabe-ende des Aufgabebandes (2) ist ein Führungsverteiler (3) angebracht, der schwenkbar und vorzugsweise mit einer zusätzlichen Antriebsenergie ausgerüstet ist. Der Stau- Drehteller (4) hat einen eigenen Antrieb. Die Oberfläche ist aus Stahlblech mit einem aufvulkanisierten glatten Kunststoff- oder Gummi-Noppengurt ausgerüstet.

./...

# Dipl.-Ing. A. Spalthoff
## Patentanwalt

— 1 —

D-43 Essen 1, den 8. 4. 1981

Pelmanstraße 31

Postschließfach 34 02 20

Telefon (0201) 77 2008

0038491

Akten-Nr. 23 960 F.
in der Antwort bitte angeben

Ingenieurgesellschaft
Hölter + Damann mbH
Beisenstraße 39–41

4390 Gladbeck

"Mobilgurtförderer für Stückgüter"

Die Erfindung betrifft ein Stückgutbelade- und Entladeband in Kompaktbauweise.

Es gibt verschiedene Vorrichtungen zum Beladen von
Stückgütern.

Diese haben jedoch alle einen begrenzten Aufnahme- sowie
auch einen begrenzten Abgabe-Bereich.

Vorzugsweise werden heute Rollenbahnen zum Be- und Entladen verwendet.

In verschiedenen Bereichen benutzt man Gurtförderer, die
jedoch nur horizontal und leicht ansteigend oder fallend
angeordnet sind und/oder auch teilweise heb- und senkbare
Vorrichtungen aufweisen.

Bei Absackanlagen bzw. Verladestationen ist der Stand
der Technik z.Zt. über Anordnung von mehreren Gurt-

Dipl.-Ing. A. Spalthoff, Patentanwalt, 43 Essen

- 2 -

förderern hintereinander oder quer zueinander gegeben.

Diese Art der Verladung ist durch die Vielzahl der erforderlichen und notwendigen zusätzlichen Antriebe von einzelnen Gurtförderbändern sehr kostenaufwendig.

Alle bisherigen Gurtförderer, die in Verladestationen eingesetzt sind, sind speziell nur für eine bestimmte Beschickung von Container, LKW's und Waggons spezifisch hergerichtet und somit nur mit hohen Personalkosten und mit sehr großem Zeitaufwand individuell in Baukastenform zusammen gruppierbar.

Die Erfindung hat sich zur Aufgabe gesetzt, durch einen Mobilförderer in Kompaktbauweise einen gezielten und kurzen Belade- und Entladevorgang zu erreichen.

Hierdurch ist die Möglichkeit gegeben
a) den Einsatzort spezifisch notwendig schnell zu ändern und
b) mit einer einzelnen Einheit, die sonst erforderliche Vielzahl der Gurtförderer zu ersetzen.

Diese gestellte Aufgabe wird gemäß der Erfindung dadurch gelöst, daß das Stückgut auf die Aufgaberollenbahn gelagert und über den Aufgabegurtförderer einem Stau- Drehteller zugefördert wird.

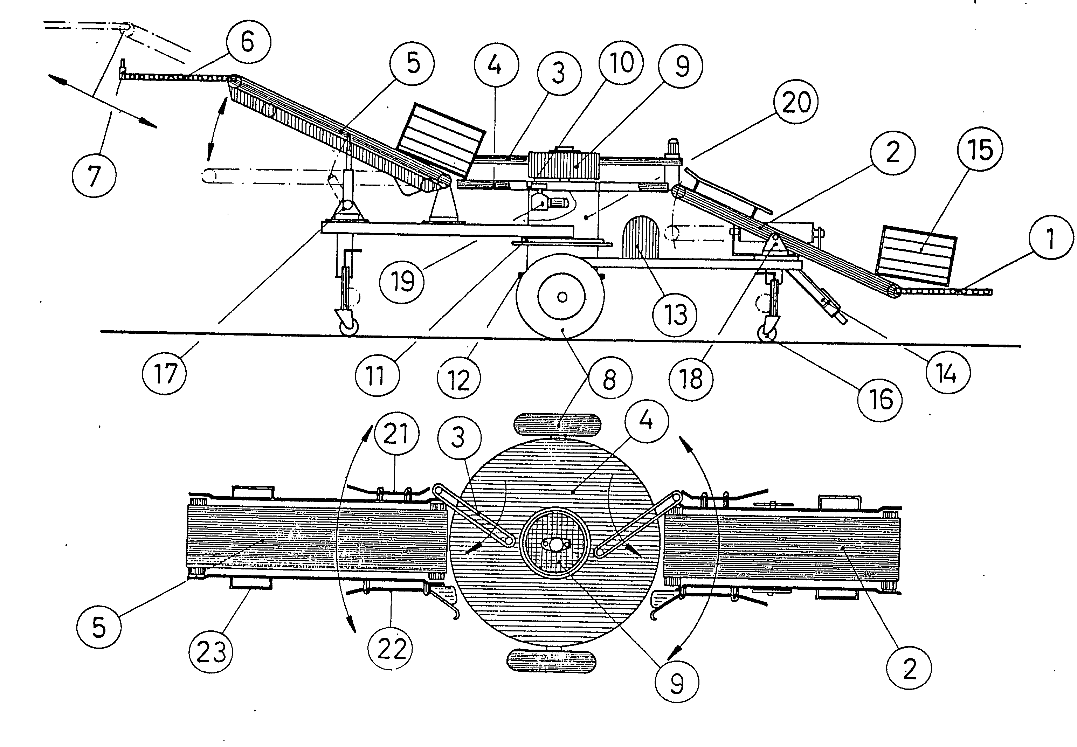

Die Aufgabenrollenbahn 1 entspricht der beiliegenden Zeichnung, kann heb- und senkbar sowie als komplette Mobileinheit mit teleskopartiger Rollenbahn zum Ein- und Ausziehen und entsprechenden Förderbändern, die wunschgerecht dem Stau- und Drehteller zugeordnet sind, versehen sein und

Dipl.-Ing. A. Spalthoff, Patentanwalt, 43 Essen

- 3 -

in mobiler Anordnung klappbar ausgeführt zum Anhängen
an einen PKW oder LKW, je nach Größenanordnung des
Systems, ausgebildet sein.

Das Aufgabeband 2 ist heb- und senkbar sowie z.B. um
die eigene Achse schwenkbar.

Hierfür ist ein Drehkranz 18 zugeordnet.

Der Aufnahmebereich wird mittels des Drehkranzes 12 , an
dem ein Auslegegerüst verlagert ist, so erweitert, daß
eine Schwenkmöglichkeit um Mitte Drehachse 4 um mehr als
180$^{\circ}$ möglich wird.

Unterhalb des Drehpunktes 18 ist eine Abstützrolle 16
angebracht, die aus Stabilitäts- und aus Kippsicherheitsgründen schwenkbar und höhenverstellbar ist.

Erfindungsgemäß ist der Übergabepunkt 2 auf dem Stau-
drehteller 4 immer konstant, so daß eine einwandfreie
Materialübergabe gewährleistet ist.

Zur besseren Führung auf dem Stau- Drehteller 4 dient
ein Führungsverteiler 3 , der schwenkbar angeordnet ist,
und dessen Funktion darin besteht, das Stückgut zentrisch
auf den Stau- Drehteller zu fördern.

Der Führungsverteiler kann mechanisch oder elektrisch
angetrieben werden, so daß von einem Bedienungsstand aus
die Materialübergabe beobachtet werden kann.

Der Stau- Drehteller wird auf einem Drehkranz mit einer

Dipl.-Ing. A. Spalthoff, Patentanwalt, 43 Essen

- 4 -

Innenverzahnung, vorzugsweise wie Ausführung 10 verlagert und mit Hilfe eines Schwenkantriebes mit aufgezogenem vorzugsweise Ritzel 19 angetrieben.

Der Drehkranz kann bei 10 auch eine Außenverzahnung bekommen, in diesem Falle würde der Schwenkantrieb 19 außerhalb des Standrohres 20 liegen.

Weiterhin ist erfindungsgemäß vorgeschlagen, daß oberhalb des Stau- Drehtellers 4 eine Innenrolle 9 als Führungsrolle angebracht ist, die eine separate Verlagerung hat. Diese Führungsrolle dient zur besseren Führung des Stückgutes und kann als Holz- oder als Stahlrolle mit aufvulkanisiertem Gummi ausgerüstet sein.

Die Materialabgabe erfolgt vom Stau- Drehteller 4 auf das Verladeband 5 und wird mittels des Führungsverteilers 3 zentrisch zur Mitte geführt, wobei insbesondere die Überkante von der Oberkante Stau- Drehteller 4 zur Oberkante Gurt vom Verladeband 5 konstant bleibt.

Das Stückgut gelangt über den Verladegurtförderer 5 auf die Abgaberollenbahn, die in ähnlicher Weise, wie die Aufgabenrollenbahn 1 ausgeführt wird. Am Abgabeende der Abgaberollenbahn 6 befindet sich ein Ausschalttaster, der vorzugsweise bei nicht Abnahme des Stückgutes als Not-Ausschalter aller Funktionen dienlich ist.

Dieser Not-Ausschalter 7 kann auch gleichzeitig als Stückgutzähler ausgebildet sein.

Das Verladeband 5 kann erfindungsgemäß auch als Teles-

Dipl.-Ing. A. Spalthoff, Patentanwalt, 43 Essen

- 5 -

kopband ausgebildet sein, so daß eine bessere gezieltere
und tiefere Stapelung von Stückgütern in Waggons, LKW's
oder Container erreicht werden kann.

Das Verladeband 5 ist ebenfalls über einen Drehpunkt 17
höhenverstellbar und kann auch durch Lösen der Befestigung
am Aufgabepunkt in sich um 180° geschwenkt werden, so daß
bei einer Verfahrmöglichkeit die gewünschte Kompaktbauweise erhalten bleibt.

Zusätzlich ist das Verladeband 5 über den Drehkranz 11
ebenfalls um den Stau- Drehteller 4 schwenkbar, so daß
eine Beladung jeweils in gewünschter Abgaberichtung erfolgen kann, unterhalb des Drehpunktes 17 ist ebenfalls
eine Abstützrolle wie bei 16 angebracht, die schwenkbar,
drehbar und höhenverstellbar ist.

Gemäß der Erfindung ist dieser Beladevorgang auch in umgekehrter Reihenfolge durchführbar, d.h. durch Umschaltung
der Drehrichtung kann in umgekehrter Reihenfolge eine
Entladung geschehen.

Die erforderliche Antriebsleistung wird aus dem öffentlichen Stromnetz entnommen oder kann auch durch Anbringung
eines Stromaggregates 13 erzeugt werden, so daß keine
andere Stromquelle notwendig ist.

Andere Motoren anstelle von E-Motoren sind selbstverständlich ebenfalls als Möglichkeit vorgesehen.

Soll der Mobilgurtförderer verladen werden, dann werden

Dipl.-Ing. A. Spalthoff, Patentanwalt, 43 Essen

- 6 -

erfindungsgemäß über den Drehpunkt 17 und 18 die
Förderbänder 2 und 5 um 90° geschwenkt und somit
mit Außenkante Radachse abschließend verlagert, d.h.
die Außenkante der Konstruktion beträgt z.B. 2 m für
die mobile Einheit.

Zum Verfahren ist es notwendig und vorgesehen, daß
die Ziehgabel 14 mit einer z.B. Natozugöse durch
einen zusätzlichen Steckbolzen verbunden wird, dadurch
ist diese Einheit in Verfahrstellung und kam in die
vorhandene Kupplung eines LKW's oder PKW's aufgehangen
werden.

Die komplette Einheit wiegt vorzugsweise als Kleinbaueinheit weniger als 750 kg und kann somit als ungebremste Einheit angesehen werden.

Dieses entspricht der Straßenverkehrsordnung. Vor dem
Transport ist selbstverständlich erforderlich, daß die
Abstützrollen 16 in max. Hochstellung geschraubt
werden, so daß der notwendige Bodenabstand immer erhalten bleibt.

PATENTANSPRÜCHE :

1.) Mobilfördergerät zum Be- und Entladen von Stückgütern, dadurch gekennzeichnet, daß es mit einem Standrohr (20) auf einem Radsatz (8) verlagert mit einem Stau- Drehteller (4) armiert ist, um welchen heb- und senkbare Gurtförderer (2,5) angeordnet sind, die das Material auf den Stau- Drehteller (4) transportieren und dieses Material über Führungsverteiler (3) so weiterleiten, daß es auf ein anderes Transportsystem, vorzugsweise Förderband oder Rollenband im gesamten Bereich des Stau- Drehtellers (4) übergeben werden kann.

2.) Mobilfördergerät zum Be- und Entladen von Stückgütern nach Anspruch 1, dadurch gekennzeichnet, daß der Stau- Drehteller (4) vorzugsweise über einen Drehkranz (10) mit einer Innenverzahnung ausgerüstet ist.

3.) Nach Anspruch 1 bis 2, dadurch gekennzeichnet, daß das Aufgabeband (2) mit integrierter Rollenbahn (1) höhenverstellbar und in Horizontalachse über einen Drehkranz (12) um das Standrohr (20) schwenkbar angeordnet ist.

4.) Mobilfördergerät nach Anspruch 1 bis 3, dadurch gekennzeichnet, daß am Abgabeende des Aufgabebandes (2) ein Führungsverteiler (3) angebracht ist, der schwenkbar und vorzugsweise mit einer zusätzlichen Antriebsenergie ausgerüstet ist.

5.) Mobilförderer nach Anspruch 1 bis 4, dadurch gekennzeichnet, daß der Stau- Drehteller (4) vorzugsweise einen eigenen Antrieb hat und daß die Oberfläche vorzugsweise aus Stahlblech mit einem aufvulkanisierten glatten Kunststoff

Dipl.-Ing. A. Spalthoff, Patentanwalt, 43 Essen

oder Gummi-Noppengurt ausgerüstet ist.

6.) Mobilförderer nach Anspruch 1 bis 5, <u>dadurch gekenn-</u><u>zeichnet</u>, daß oberhalb des Stau- Drehtellers (4) eine oder mehrere Führungsrollen (9) angebracht sind, die eine zentrische, gewünschte Materialförderung gewährleisten.

7.) Mobilförderer nach Anspruch 1 bis 6, <u>dadurch gekenn-</u><u>zeichnet</u>, daß das hebe- und senkbare sowie teleskopierbare Verladeband (5) ebenfalls über einen Drehkranz (11) horizontal um das Standrohr (20) schwenkbar angeordnet ist.

8.) Mobilförderer nach Anspruch 1 bis 7, <u>dadurch gekenn-</u><u>zeichnet</u>, daß das Standrohr (20) mit der losen Rolle (9) sowie den vorzugsweise drei Drehkränzen (10,11,12) auf einer Radachse (8) senkrecht übereinander verbunden sind.

9.) Mobilförderer nach Anspruch 1 bis 8, <u>dadurch gekenn-</u><u>zeichnet</u>, daß Abstützrollen am Aufgabe- und Abgabepunkt (16) drehbar und höhenverstellbar angeordnet sind.

10.) Mobilförderer nach Anspruch 1 bis 9, <u>dadurch gekenn-</u><u>zeichnet</u>, daß am Aufgabeband unterhalb des Drehpunktes (18) eine Ziehgabel (14) angebracht wird, die mit einer vorzugsweise Natoöse ausgerüstet ist.

11.) Mobilförderer nach Anspruch 1 bis 10, <u>dadurch gekenn-</u><u>zeichnet</u>, daß am Aufgabeband (2) unterhalb des Drehpunktes (18) eine Ziehgabel (14) angebracht ist, die vorzugsweise eine Natoöse aufweist.

Dipl.-Ing. A. Spalthoff, Patentanwalt, 43 Essen

12.) Mobilförderer nach Anspruch 1 bis 11, <u>dadurch gekenn-</u><u>zeichnet</u>, daß die Aufgaberollenbahn (1) und die Abgaberollenbahn (6) durch eine oder mehrere Zuführungsförderer ersetzt werden können.

13.) Mobilförderer nach Anspruch 1 bis 12, <u>dadurch gekenn-</u><u>zeichnet</u>, daß durch Hinwegnahme der Radachse (8) das Standrohr (20) mittels der vorhandenen Bodenplatte auf ein Fundament bzw. auf einen festen Boden verlagert werden kann und somit stationär und ortsfest für eine bestimmte und gezielte Verladung dienlich werden kann,

14.) Mobilförderer nach Anspruch 1 bis 13, <u>dadurch gekenn-</u><u>zeichnet</u>, daß das Stromaggregat stationär oder durch Lösen der Schrauben separat verlagert werden kann.